(19) Europäisches Patentamt
European Patent Office
Office européen des brevets

(11) **EP 1 668 385 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(21) Anmeldenummer: 04765672.3

(22) Anmeldetag: **29.09.2004**

(51) Int Cl.:
**G01S 13/93** (2006.01)

(86) Internationale Anmeldenummer:
**PCT/EP2004/010867**

(87) Internationale Veröffentlichungsnummer:
**WO 2005/033735 (14.04.2005 Gazette 2005/15)**

(54) **VERFAHREN UND ABSTANDSERFASSUNGSVORRICHTUNG ZUM ERFASSEN DES PROJIZIERTEN ABSTANDES ZWISCHEN EINER ABSTANDSMESSEINRICHTUNG UND EINEM HINDERNIS**

METHOD AND DISTANCE DETECTING DEVICE FOR DETECTING THE PROJECTED DISTANCE BETWEEN A DISTANCE MEASURING DEVICE AND AN OBSTACLE

PROCEDE ET DISPOSITIF DE DETERMINATION DE DISTANCE PERMETTANT DE DETERMINER LA DISTANCE PROJETEE ENTRE UN DISPOSITIF DE MESURE DE DISTANCE ET UN OBSTACLE

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.10.2003 DE 10346074**

(43) Veröffentlichungstag der Anmeldung:
**14.06.2006 Patentblatt 2006/24**

(73) Patentinhaber: **Valeo Schalter und Sensoren GmbH**
**74321 Bietigheim-Bissingen (DE)**

(72) Erfinder:
• **HEIMBERGER, Markus**
**71732 Tamm (DE)**
• **GOTZIG, Heinrich**
**74081 Heilbronn (DE)**

(74) Vertreter: **Steimle, Josef**
**Patentanwälte**
**Dreiss, Fuhlendorf, Steimle & Becker,**
**Postfach 10 37 62**
**70032 Stuttgart (DE)**

(56) Entgegenhaltungen:
**DE-A- 4 333 357      DE-A- 10 151 965**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 668 385 B1

**Beschreibung**

Die Erfindung betrifft ein Verfahren zum Ermitteln des projizierten Abstandes zwischen einer Abstandsmesseinrichtung welche vorzugsweise in ein Fahrzeug eingebaut ist, und einem Hindernis. Darüber hinaus betrifft die Erfindung ein Computerprogramm mit Programmcode und eine Abstandserfassungsvorrichtung zum Durchführen dieses Verfahrens.

Aus dem Stand der Technik sind derartige Verfahren und Vorrichtungen grundsätzlich bekannt. Bei jedem Hindernis in der Umgebung der Abstandsmessvorrichtung gibt es immer einen nächstgelegensten Punkt auf der Oberfläche des Hindernisses, welcher den kürzesten projizierten Abstand aller Punkte des Hindernisses zu der Abstandsmesseinrichtung aufweist. Dieser kürzeste projizierte Abstand wird von den bekannten Verfahren und Vorrichtungen dann ermittelt, wenn und solange der nächstgelegenste Punkt im Detektionsbereich der Abstandsmessvorrichtung liegt. Bei zum Beispiel in Kraftfahrzeugen eingebauten Abstandsmesseinrichtungen mit horizontaler Ausrichtung und kegelförmigem Detektionsbereich besteht jedoch die Gefahr, dass Hindernisse, deren maximale Höhe kleiner als die Höhe der Einbauposition der Abstandsmesseinrichtung ist, aus dem kegelförmigen Detektionsbereich verschwinden, wenn ein bestimmter Mindestabstand unterschritten wird.

Aus der DE 43 33 357 ist ein Verfahren zum Ermitteln des projizierten Abstandes zwischen einer in einem Kraftfahrzeug eingebaute Abstandsmesseinrichtung und einem Hindernis, gemäss dem Oberbegriff des Anspruchs 1 bekannt.

Ausgehend von diesem Stand der Technik ist es deshalb die Aufgabe der Erfindung, ein Verfahren zum Ermitteln des kürzesten projizierten Abstands zwischen einer Abstandsmesseinrichtung und einem Hindernis sowie ein Computerprogramm und eine Abstandserfassungsvorrichtung zur Durchführung dieses Verfahrens bereit zu stellen, welche die Berechnung dieses kürzesten projizierten Abstandes auch dann noch ermöglichen, wenn dieser Punkt außerhalb des Detektionsbereiches der Abstandsmesseinrichtung liegt.

Diese Aufgabe wird durch das im Patentanspruch 1 beanspruchte Verfahren gelöst. Dieses beanspruchte Verfahren zeichnet sich durch folgende Schritte aus: Speichern eines Grenzzeitpunktes, wann der nächstgelegenste Punkt des Hindernisses bei einer Annäherung zwischen der Abstandsmesseinrichtung und dem Hindernis aus dem Detektionsbereich der Abstandsmesseinrichtung entschwindet; Speichern eines projizierten Grenzabstandes zwischen dem nächstgelegensten Punkt des Hindernisses und der Abstandsmesseinrichtung zu dem Grenzzeitpunkt; und Ermitteln des projizierten Abstandes zwischen dem nächstgelegensten Punkt des Hindernisses und der Abstandsmesseinrichtung unter Berücksichtigung des Grenzabstandes, des Grenzzeitpunktes und von Informationen über die Relativbewegung der Abstandsmesseinrichtung und des Hindernisses zueinander, solange der nächstgelegenste Punkt des Hindernisses außerhalb des Detektionsbereiches der Abstandsmesseinrichtung liegt.

Vorteilhafterweise ermöglicht dieses beanspruchte Verfahren die Berechnung des jeweils kürzesten projizierten Abstandes zwischen dem Hindernis und der Abstandsmesseinrichtung auch dann noch, wenn der nächstgelegenste Punkt auf der Oberfläche des Hindernisses außerhalb des Detektionsbereiches der Abstandsmesseinrichtung liegt. Erfindungsgemäß ist diese Berechnung möglich bei Kenntnis eines Grenzabstandes, eines Grenzzeitpunktes und von Information über die Relativbewegung der Abstandsmesseinrichtung und des Hindernisses zueinander. Der nächstgelegenste Punkt des Hindernisses ist jener Punkt auf der Oberfläche des Hindernisses, welcher den kürzesten projizierten Abstand aller Punkte des Hindernisses zu der Abstandsmesseinrichtung aufweist. Dabei bedeutet projizierter Abstand die Länge der Projektion des direkten Abstandes zwischen dem nächstgelegensten Punkt P und der Abstandsmesseinrichtung auf einer Horizontalen. Die Begriffe Grenzzeitpunkt und Grenzabstand sind bei der vorliegenden Anmeldung so zu verstehen, wie sie im letzten Absatz definiert wurden.

Vorteilhafterweise erfolgt die Ermittlung des Abstandes und insbesondere des projizierten Abstandes zwischen dem nächstgelegensten Punkt P und -der Abstandsmesseinrichtung auf Basis von Informationen über die Position und insbesondere die Höhe des nächstgelegensten Punktes über Grund. Diese Positions- beziehungsweise Höheninformation wird von einer Abstandserfassungsvorrichtung zum Beispiel ermittelt, solange der nächstgelegenste Punkt des Hindernisses noch innerhalb des Detektionsbereiches der Abstandsmesseinrichtung liegt.

Weitere vorteilhafte Ausgestaltungen des Verfahrens sind Gegenstand der Unteransprüche.

Die oben genannte Aufgabe der Erfindung wird weiterhin durch ein Computerprogramm mit Programmcode und eine Abstandserfassungsvorrichtung gelöst. Die Vorteile dieser beiden Lösung entsprechen den oben mit Bezug auf das beanspruchte Verfahren genannten Vorteilen.

Der Beschreibung sind insgesamt zwei Figuren beigefügt, wobei

Figur 1     den Aufbau einer erfindungsgemäßen Abstandserfassungsvorrichtung;

Figur 2a     die Ermittlung des Abstandes zwischen einem nächstgelegensten Punkt P und einer Abstandsmesseinrichtung für den Fall, dass der nächstgelegenste Punkt innerhalb des Detektionsbereiches der Abstandserfassungseinrichtung liegt;

Figur 2b die Berechnung des projizierten Abstandes zwischen dem nächstgelegensten Punkt P und der Abstandsmesseinrichtung für den Fall, dass der nächstgelegenste Punkt auf dem Rand des Detektionsbereiches liegt; und

Figur 2c die Ermittlung des projizierten Abstandes zwischen dem nächstgelegensten Punkt P und der Abstander-mittlungseinrichtung für den Fall, dass der nächstgelegenste Punkt P außerhalb des Detektionsbereiches der Abstandsermittlungseinrichtung liegt

zeigt.

Die Erfindung wird nachfolgend unter Bezugnahme auf die der Beschreibung beigefügten Figuren in Form von Ausführungsbeispielen näher erläutert.

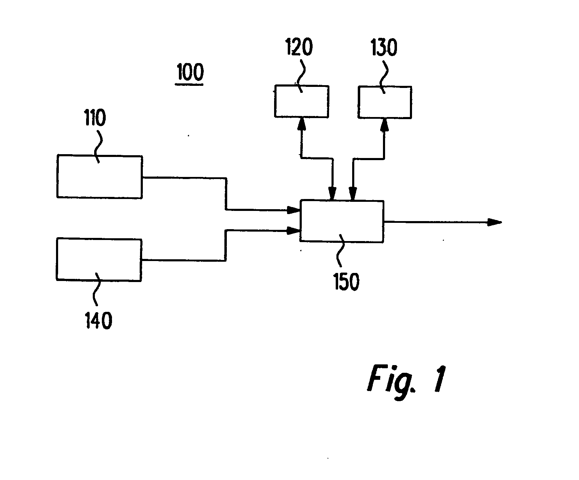

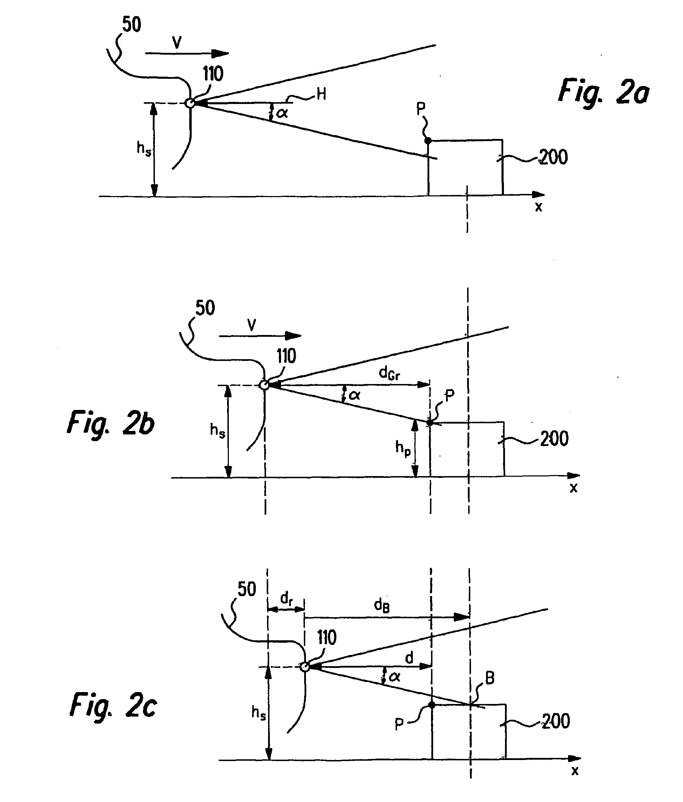

Figur 1 zeigt den Aufbau der erfindungsgemäßen Abstandserfassungsvorrichtung 100. Sie ist vorzugsweise in ein Kraftfahrzeug 50 in einer Höhe von $h_s$ über Grund beziehungsweise über eine Straße, siehe Figur 2a, angeordnet. Sie umfasst eine Abstandsmesseinrichtung 110, zum Beispiel in Form eines Ultraschall oder Radarsensors, zum Ermitteln des Abstandes zwischen der Abstandsmesseinrichtung 110 und einem Hindernis 200 in der Umgebung der Abstandsmesseinrichtung 110. Für die Erfindung wird davon ausgegangen, dass die maximale Höhe hp des Hindernisses 200 über Grund beziehungsweise oberhalb der Straßenoberfläche, siehe Figur 2b, kleiner als die Höhe $h_s$ der Einbau-position der Abstandsmesseinrichtung 110 in dem Fahrzeug 50 ist. Diese Voraussetzung ist deswegen zu treffen, weil nur dann gewährleistet ist, dass ein nächstgelegenster Punkt P des Hindernisses 200, welcher den kürzesten projizierten Abstand aller Punkte des Hindernisses zu der Abstandsmesseinrichtung 110 aufweist, je nach Größe des tatsächlichen Abstandes zwischen diesem nächstgelegensten Punkt und der Abstandsmesseinrichtung 110 sowohl innerhalb wie auch außerhalb des Detektionsbereiches der Abstandsmesseinrichtung liegen kann.

Weiterhin umfasst die Abstandserfassungsvorrichtung 100 ein erstes Speicherelement 120 zum Speichern eines Grenzzeitpunktes, wann der nächstgelegenste Punkt P des Hindernisses 200 bei einer Annäherung zwischen der Abstandsmesseinrichtung 110 und dem Hindernis 200 aus dem Detektionsbereich der Abstandsmesseinrichtung 110 austritt. Darüber hinaus umfasst die Abstandserfassungsvorrichtung 100 ein zweites Speicherelement 130 zum Speichern eines projizierten Grenzabstandes $d_{Gr}$ zwischen dem nächstgelegensten Punkt P des Hindernisses 200 und der Abstandsmesseinrichtung 110 zu dem Grenzzeitpunkt.

Darüber hinaus umfasst die Abstandserfassungsvorrichtung eine Weggebereinrichtung 140 zum Ermitteln von Weginformationen über eine Relativbewegung zwischen der Abstandsmesseinrichtung 110 und dem Hindernis 200, insbesondere nach dem Grenzzeitpunkt, d.h. wenn der nächstgelegenste Punkt P des Hindernisses 200 außerhalb des Detektionsbereiches der Abstandsmesseinrichtung 110 liegt. Diese Weggebervorrichtung ist vorzugsweise zusammen mit allen anderen bisher beschriebenen Komponenten der Abstandserfassungsvorrichtung 100 in einem Kraftfahrzeug 50 eingebaut. Dies ist insbesondere dann sinnvoll, wenn das Kraftfahrzeug beweglich ist und ein unbewegliches stationäres Hindernis erfasst werden soll. Die Abstandserfassungsvorrichtung und insbesondere die Weggebereinrichtung können jedoch auch vollständig in dem Hindernis 200 oder verteilt auf das Kraftfahrzeug 50 und das Hindernis 200 angeordnet sein. Wichtig ist nur, dass die Weggebereinrichtung ausgebildet ist und so angeordnet ist, dass sie eine Relativbewegung zwischen der Abstandsmesseinrichtung 110 und dem Hindernis 200 unabhängig davon erfasst, ob sich die Abstandsmesseinrichtung 110, das Hindernis 200 oder beide zusammen relativ zueinander bewegen. Schließlich umfasst die Abstandserfassungsvorrichtung noch eine Berechnungseinrichtung 150 zum Ermitteln des projizierten Abstandes d zwischen dem nächstgelegensten Punkt P des Hindernisses 200 und der Abstandsmesseinrichtung 110. Diese Berechnungseinrichtung 150 ist ausgebildet zum Berechnen dieses projizierten Abstandes unter Berücksichtigung des Grenzabstandes $d_{Gr}$ und von Informationen über die Relativbewegung der Abstandsmesseinrichtung und des Hindernisses zueinander. Optimal kann bei der Berechnung zusätzlich auch der Grenzzeitpunkt berücksichtigt werden.

Die Funktionsweise der in Figur 1 dargestellten Abstandserfassungsvorrichtung 100 wird nachfolgend unter Bezugnahme auf die Figuren 2a, 2b und 2c in Form von Ausführungsbeispielen detailliert beschrieben.

Zur Veranschaulichung des Verfahrens wird in allen Figuren 2a bis 2c beispielhaft angenommen, dass sich das Kraftfahrzeug 50 mit einer Geschwindigkeit V auf das stillstehende, d.h. das stationäre Hindernis 200 zubewegt. Dies ist bekanntermaßen nur ein Spezialfall einer Relativbewegung; eine Relativbewegung findet auch dann statt, wenn sich nur das Hindernis 200 bewegt und das Fahrzeug 50 stillstehende würde, oder wenn sich beide Objekte, das Fahrzeug 50 und das Hindernis 200 gleichzeitig bewegen würden. In Figur 2 ist die Einbauhöhe der Abstandsmess-richtung 110 über der Straße mit $h_s$ bezeichnet. Derjenige Punkt auf der Oberfläche des Hindernisses 200, welcher den kürzesten projizierten Abstand zu der Abstandsmesseinrichtung 110 aufweist, ist mit P bezeichnet. Die Höhe dieses Punktes P über Grund beziehungsweise über der Straße ist mit $h_P$ bezeichnet.

Figur 2a zeigt zunächst eine Situation, bei welcher der Abstand zwischen der Abstandsmesseinrichtung 110 und dem nächstgelegensten Punkt P des Hindernisses 200 so groß ist, dass der nächstgelegenste Punkt P innerhalb des Detektionsbereiches der Abstandsmesseinrichtung 110 liegt. Einer Ermittlung dieses Abstandes ist dann, wie ursprünglich vorgesehen, mit geeigneter Abstandsinformation einfach möglich.

Wenn sich das Fahrzeug 50 jedoch mit einer Geschwindigkeit V auf das als stationär angenommene Hindernis 200 zubewegt, dann wandert der nächstgelegenste Punkt P zunehmend aus dem inneren des Detektionsbereiches der Abstandsmesseinrichtung 110 heraus, bis er schließlich auf dessen Grenze liegt, wie in Figur 2b angedeutet. Der Zeitpunkt, zu dem dieses Situation eintritt, wird im Rahmen der vorliegenden Erfindung als Grenzzeitpunkt bezeichnet; der dann bestehende projizierte Abstand zwischen dem nächstgelegensten Punkt P und der Abstandsmesseinrichtung 110 wird als Grenzabstand bezeichnet. Die Erfassung und Speicherung dieser beiden Grenzgrößen ist wesentlich für die vorliegende Erfindung, weil erst die Kenntnis dieser beiden Grenzgrößen eine Berechnung des Abstandes zwischen dem nächstgelegensten Punkt P und der Abstandsmesseinrichtung 110 auch dann noch ermöglicht, wenn der nächstgelegenste Punkt P nicht mehr innerhalb des Detektionsbereiches der Abstandsmessvorrichtung 110 liegt. Der Detektionsbereich der meisten Abstandsmesseinrichtungen ist durch die Lage und den Öffnungswinkel ihres Abstrahlkegels definiert. Bei Kenntnis desjenigen Anteils $\alpha$ des Öffnungswinkels der Abstandsmesseinrichtung 110, welcher unterhalb der horizontalen H liegt, sowie der Differenz zwischen der Einbauhöhe $h_s$, der Abstandsmesseinrichtung 110 und der Höhe $h_P$ des nächstgelegensten Punktes P lässt sich der Grenzabstand $d_{Gr}$ zu den Grenzzeitpunkt gemäß folgender Formel (1) berechnen

$$d_{Gr} = \frac{\tan(\alpha)}{h_S - h_P} \qquad\qquad (1)$$

Eine weitere Annäherung ergibt sich dann, wenn sich beispielsweise das Fahrzeug 50 weiter auf das Hindernis 200 zubewegt. Diese Relativbewegung ist in Figur 2c in Form der Wegstrecke $d_r$, welche von der Weggebereinrichtung 140 ermittelt wird, dargestellt. Die Größe dieser Relativbewegung interessiert insbesondere ab dem Grenzzeitpunkt, zudem der nächstgelegenste Punkt P des Hindernisses 200 aus dem Detektionsbereich der Abstandsmesseinrichtung 110 entschwunden ist. Letzteres ist in Figur 2c angedeutet, in dem der nächstgelegenste Punkt P nicht mehr innerhalb des durch den Winkel $\alpha$ begrenzten Kegels liegt. Bei der in Figur 2c dargestellten Situation berechnet die Berechnungseinrichtung 150 den projizierten Abstand d zwischen dem nächstgelegensten Punkt P des Hindernisses 200 und der Abstandsmesseinrichtung 110 erfindungsgemäß durch einfache Subtraktion der relativen Wegstrecke $d_r$ von dem Grenzabstand $d_{Gr}$. Diese Berechnungsweise gilt unabhängig davon, wie schnell das Hindernis nach der Detektion von dessen nächstliegenstem Punkt gänzlich aus dem Detektionsbereich der Abstandsmesseinrichtung 110 entschwindet; bei schmalen Hindernissen erfolgt dies eher als bei breiten Hindernissen.

Bei breiten Hindernissen, wie dem in Figur 2c gezeigten Hindernis 200, werden Teile des Hindernisses 200 selbst dann noch erfasst, wenn der nächstgelegenste Punkt P bereits nicht mehr in dem Detektionsbereich liegt. Dies ist in Figur 2c dadurch angedeutet, dass der Strahlungskegel der Abstandsmesseinrichtung 110 das Hindernis 200 auf dessen oberen Oberfläche in dem Punkt B berührt. Eine Interpretation des projizierten Abstandes $d_B$ dieses Punktes B als kürzeste Entfernung zwischen dem Hindernis 200 und der Abstandsmesseinrichtung 110 wäre falsch, wie eine Vergleich mit dem ebenfalls in Figur 2c eingezeichneten richtigen projizierten Abstand d zeigt und hätte eventuell einen unerwünschten Aufprall des Fahrzeug 50 auf das Hindernis 200 zu Folge. Die Strecke d stellt den tatsächlich kürzesten Abstand dar.

Das soeben beschriebene und beanspruchte Verfahren zum Ermitteln des projizierten Abstandes zwischen einer Abstandsmesseinrichtung 110 und einem Hindernis 200 gemäß der Erfindung wird vorzugsweise in Form eines Computerprogramms realisiert, welches auf einem geeigneten Rechengerät, insbesondere einem Mikroprozessor abläuft. Das Computerprogramm kann, gegebenenfalls zusammen mit weiteren Computerprogrammen, auf einem computerlesbaren Datenträger abgespeichert sein. Bei dem Datenträger kann es sich um eine Diskette, eine Compactdisk (sogenannte CD), einen Flash-Memory oder vergleichen handeln. Das auf dem Datenträger abgespeicherte Computerprogramm kann als Produkt an einen Kunden übertragen und verkauft werden. Das Computerprogramm kann eventuell jedoch auch ohne die Zuhilfenahme eines Datenträgers über ein elektronisches Kommunikationsnetz als Produkt an einen Kunden übertragen und verkauft werden. Bei dem Kommunikationsnetzwerk kann es sich z.B. um das Internet handeln.

**Patentansprüche**

1. Verfahren zum Ermitteln des projizierten Abstandes zwischen einer Abstandsmesseinrichtung (110), vorzugsweise eingebaut in ein Kraftfahrzeug (50), und einem Hindernis (200);
wobei das Hindernis (200) eine maximale Höhe aufweist, welche kleiner als die Höhe ($h_s$) der Position der Ab-

standsmesseinrichtung ist, und auf seiner Oberfläche einen vorbekannten nächstgelegensten Punkt (P) aufweist, welcher den kürzesten projizierten Abstand (d) aller Punkte des Hindernisses (200) zu der Abstandsmesseinrichtung aufweist;

**gekennzeichnet durch folgende Schritte** Speichern eines projizierten Grenzabstandes ($d_{Gr}$) zwischen dem nächstgelegensten Punkt (P) des Hindernisses (200) und der Abstandsmesseinrichtung (110) zu einem Grenzzeitpunkt, zu dem der nächstgelegenste Punkt (P) des Hindernisses (200) bei einer Annäherung zwischen der Abstandsmesseinrichtung (110) und dem Hindernis aus dem Detektionsbereich der Abstandsmesseinrichtung (110) entschwindet; und Ermitteln des projizierten Abstandes (d) zwischen dem nächstgelegensten Punkt (P) des Hindernisses (200) und der Abstandsmesseinrichtung unter Berücksichtigung des Grenzabstandes ($d_{Gr}$) und von Informationen über die Relativbewegung der Abstandsmesseinrichtung (110) und des Hindernisses (200) zueinander, solange der nächstgelegenste Punkt (P) des Hindernisses (200) außerhalb des Detektionsbereiches der Abstandsmesseinrichtung (110) liegt.

2. Verfahren nach Anspruch 1, **dadurch gekennzeichnet, dass** die Position und insbesondere die Höhe (hp) des nächstliegensten Punktes (P) des Hindernisses (200) auf Basis von von der Abstandsmessreinrichtung (110) bereitgestellten Informationen ermittelt wird, solange der nächstgelegenste Punkt (P) des Hindernisses (200) innerhalb des Detektionsbereiches der Abstandsmesseinrichtung (110) liegt.

3. Verfahren nach Anspruch 1 oder 2, **gekennzeichnet durch** Ermitteln des Abstandes zwischen dem nächstgelegensten Punkt (P) und der Abstandsmesseinrichtung (110) auf Basis von von der Abstandsmessreinrichtung bereitgestellten Abstandsinformationen, solange der nächstgelegenste Punkt (P) des Hindernisses innerhalb des Detektionsbereiches der Abstandsmesseinrichtung (110) liegt.

4. Verfahren nach einem der vorangegangenen Ansprüche, **dadurch gekennzeichnet, dass** der Detektionsbereich im wesentlichen durch den Öffnungswinkel der Abstandsmesseinrichtung definiert ist und dass sich der Grenzabstand ($d_{Gr}$) bei Hindernissen (200), bei denen die Höhe ($h_P$) des nächstgelensten Punktes über Grund mit der maximalen Gesamthöhe des Hindernisses übereinstimmt, sich gemäß folgender Formel (1) berechnet :

$$d_{Gr} = \frac{\tan(\alpha)}{h_S - h_P} \quad , \qquad\qquad (1)$$

wobei

$h_S$ die Einbauhöhe der Abstandsmesseinrichtung über Grund; und
$\alpha$ den Anteil des Öffnungswinkels der Abstandsmesseinrichtung unterhalb der Horizontalen

repräsentiert.

5. Computerprogramm mit Programmcode für eine Abstandserfassungsvorrichtung, **dadurch gekennzeichnet, dass** der Programmcode ausgebildet ist zur Durchführung des Verfahrens nach einem der Ansprüche 1-4.

6. Abstandserfassungsvorrichtung (100), insbesondere für ein Kraftfahrzeug (50), umfassend:

eine Abstandsmesseinrichtung (110) zum Ermitteln des Abstandes zwischen der Abstandsmesseinrichtung und einem Hindernis in der Umgebung der Abstandsmesseinrichtung; wobei das Hindernis eine maximale Höhe aufweist, welche kleiner als die Höhe der Position der Abstandsmesseinrichtung ist, und einen bekannten nächstgelegensten Punkt aufweist, welcher den kürzesten projizierten Abstand aller Punkte des Hindernisses zu der Abstandsmesseinrichtung aufweist;
**gekennzeichnet, durch**
ein erstes Speicherelement (120) Zum Speichern eines Grenzzeitpunktes und ein zweites Speicherelement (130) zum Speichern eines projizierten Grenzabstandes zwischen dem nächstgelegensten Punkt (P) des Hindernisses (200) und
der Abstandsmesseinrichtung (110) zum Grenzzeitpunkt, zu dem der nächstgelegenste Punkt (P)
des Hindernisses (200) bei einer Annäherung zwischen der Abstandsmesseinrichtung (110) und dem Hindernis

(200)

aus dem Detektionsbereich der Abstandsmesseinrichtung (110) entschwindet;

eine Weggebereinrichtung (140) zum Ermitteln von Weginformationen über eine Relativbewegung zwischen der Abstandsmesseinrichtung (110) und dem Hindernis (200), insbesondere wenn der nächstgelegenste Punkt (P) des Hindernisses (200) außerhalb des Detektionsbereiches der Abstandsmesseinrichtung (110) liegt; und eine Berechnungseinrichtung (150) zum Ermitteln des projizierten Abstandes (d) zwischen dem nächstgelegensten Punkt des Hindernisses und der Abstandsmesseinrichtung (110) unter Berücksichtigung des Grenzabstandes ($d_{Gr}$) und den von der Weggebereinrichtung (140) bereitgestellten Weginformationen.

**Claims**

1. Method for detecting the projected distance between a distance measuring device (110), preferably installed in a vehicle (50), and an obstacle (200);

   wherein the obstacle (200) has a maximum height which is smaller than the height ($h_s$) of the position of the distance measuring device as well as a predetermined nearest point (P) on its surface which is the shortest projected distance (d) of all points of the obstacle (200) from the distance measuring device;

   **characterized by** the following steps

   storing a projected limit distance ($d_{Gr}$) between the nearest point (P) of the obstacle (200) and the distance measuring device (110) at a limit time at which the nearest point (P) of the obstacle (200) moves out of the detecting range of the distance measuring device (110) as the distance measuring device (110) and the obstacle approach each other; and

   detecting the projected separation (d) between the nearest point (P) of the obstacle (200) and the distance measuring device, thereby taking into consideration the limit distance ($d_{Gr}$) and information about the motion of the distance measuring device (110) and the obstacle (200) relative to each other, as long as the nearest point (P) of the obstacle (200) is outside of the detecting range of the distance measuring device (110).

2. Method according to claim 1, **characterized in that** the position and, in particular, the height ($h_P$) of the nearest point (P) of the obstacle (200) is detected on the basis of information provided by the distance measuring device (110) as long as the nearest point (P) of the obstacle (200) is within the detecting range of the distance measuring device (110).

3. Method according to claim 1 or 2, **characterized by** detecting the distance between the nearest point (P) and the distance measuring device (110) on the basis of distance information provided by the distance measuring device as long as the nearest point (P) of the obstacle is within the detecting range of the distance measuring device (110).

4. Method according to any one of the preceding claims,

   **characterized in that** the detecting range is substantially defined by the opening angle of the distance measuring device, and the limit distance ($d_{Gr}$) for obstacles (200) having a height ($h_P$) of their nearest point above ground corresponding to the maximum total height of the obstacle, is calculated according to the following formula (1):

$$d_{Gr} = \frac{\tan(\alpha)}{h_s - h_P} \tag{1}$$

   wherein

   $h_s$ is the installation height of the distance measuring device above ground; and
   $\alpha$ is the portion of the opening angle of the distance measuring device below the horizontal.

5. Computer program including program code for a distance detecting device, **characterized in that** the program code is designed to perform the method according to any one of the claims 1 through 4.

6. Distance detecting device (100), in particular, for a vehicle (50) comprising:

   a distance measuring device (110) for detecting the distance between the distance measuring device and an obstacle in the vicinity of the distance measuring device, wherein the obstacle has a maximum height which is smaller than the height of the position of the distance measuring device, and a known nearest point which has the shortest projected distance of all points of the obstacle from the distance measuring device;

**characterized by**

a first storage element (120) for storing a limit time and a second storage element (130) for storing a projected limit distance between the nearest point (P) of the obstacle (200) and the distance measuring device (110) at the limit time, at which the nearest point (P) of the obstacle (200) moves out of the detecting range of the distance measuring device (110) as the distance measuring device (110) and the obstacle (200) approach each other; a distance determination means (140) for determining the distance information about a relative motion between the distance measuring device (110) and the obstacle (200), in particular, when the nearest point (P) of the obstacle (200) is outside of the detecting range of the distance measuring device (110); and

a calculating means (150) for determining the projected distance (d) between the nearest point of the obstacle and the distance measuring device (110), thereby taking into consideration the limit distance ($d_{Gr}$) and the distance information provided by the distance determination means (140) .

**Revendications**

1.  Procédé pour déterminer la distance projetée entre un dispositif de mesure de distance (110), de préférence intégré dans un véhicule (50), et un obstacle (200) ;

    l'obstacle (200) présentant une hauteur maximale, qui est inférieure à la hauteur ($h_s$) de la position du dispositif de mesure de distance, et présente sur sa surface un point (P) le plus proche déjà connu, qui présente la distance (d) projetée la plus courte de tous les points de l'obstacle (200) au dispositif de mesure de distance ;

    **caractérisé par** les étapes suivantes

    le stockage d'une distance limite ($d_{Gr}$) projetée entre le point (P) le plus proche de l'obstacle (200) et le dispositif de mesure de distance (110) à un instant limite, où le point (P) le plus proche de l'obstacle (200) disparaît de la zone de détection du dispositif de mesure de distance (110) lors d'un rapprochement entre le dispositif de mesure de distance (110) et l'obstacle ; et détermination de la distance (d) projetée entre le point (P) le plus proche de l'obstacle (200) et le dispositif de mesure de distance compte tenu de la distance limite ($d_{Gr}$) et d'informations concernant le déplacement relatif entre le dispositif de mesure de distance (110) et l'obstacle (200) aussi longtemps que le point (P) le plus proche de l'obstacle (200) est situé à l'extérieur de la zone de détection de dispositif de mesure de distance (110).

2.  Procédé selon la revendication 1, **caractérisé en ce que** la position et en particulier la hauteur (hp) du point (P) le plus proche de l'obstacle (200) est déterminé sur la base d'informations mises à disposition par le dispositif de mesure de distance (110) aussi longtemps que le point (P) le plus proche de l'obstacle (200) est situé à l'intérieur de la zone de détection du dispositif de mesure de distance (110).

3.  Procédé selon la revendication 1 ou 2, **caractérisé par** la détermination de la distance entre le point (P) le plus proche et le dispositif de mesure de distance (110) sur la base d'informations de distance mises à disposition par le dispositif de mesure de distance aussi longtemps que le point (P) le plus proche de l'obstacle se situe à l'intérieur de la zone de détection du dispositif de mesure de distance (110).

4.  Procédé selon l'une quelconque des revendications précédentes, **caractérisé en ce que** la zone de détection est définie essentiellement par l'angle d'ouverture du dispositif de mesure de distance et **en ce que** la distance limite ($d_{Gr}$) se calcule selon la formule (1) suivante en cas d'obstacles (200), sur lesquels la hauteur ($h_p$) du point le plus proche au-dessus du sol coïncide avec la hauteur globale maximale de l'obstacle :

$$dG_r = \frac{\tan(\alpha)}{h_s - h_p} \tag{1}$$

$h_s$ étant la hauteur de montage du dispositif de mesure de distance au-dessus du sol et

α la fraction de l'angle d'ouverture du dispositif de mesure de distance au-dessous de l'horizontale.

5.  Programme informatique avec code de programme pour un dispositif d'enregistrement de distance, **caractérisé en ce que** le code de programme est réalisé pour mettre en oeuvre le procédé selon l'une quelconque des revendications 1 à 4.

6.  Dispositif d'enregistrement de distance (100), en particulier pour un véhicule (50), comprenant :

   un dispositif de mesure de distance (110) pour déterminer la distance entre le dispositif de mesure de distance et un obstacle dans l'environnement du dispositif de mesure de distance ; l'obstacle présentant une hauteur maximale qui est inférieure à la hauteur de la position du dispositif de mesure de distance, et présente un point le plus proche connu, qui présente la distance projetée la plus courte de tous les points de l'obstacle au dispositif de mesure de distance ;

   **caractérisé par**
   un premier élément de stockage (120) pour le stockage d'un instant limite et un second élément de stockage (130) pour le stockage d'une distance limite projetée entre le point (P) le plus proche de l'obstacle (200) et le dispositif de mesure de distance (110) à l'instant limite, où le point (P) le plus proche de l'obstacle (200) disparaît de la zone de détection du dispositif de mesure de distance (110) lors d'un rapprochement entre le dispositif de mesure de distance (110) et l'obstacle (200) ;
   un dispositif transmetteur de course (140) pour déterminer des informations de course concernant un déplacement relatif entre le dispositif de mesure de distance (110) et l'obstacle (200), en particulier dans le cas où le point (P) le plus proche de l'obstacle (200) est situé à l'extérieur de la zone de détection du dispositif de mesure de distance (110) ; et un dispositif de calcul (150) pour déterminer la distance (d) projetée entre le point le plus proche de l'obstacle et le dispositif de mesure de distance (110) compte tenu de la distance limite ($d_{Gr}$) et les informations de course mises à disposition par le dispositif transmetteur de course (140).

Fig. 1

Fig. 2a

Fig. 2b

Fig. 2c